(19) **Europäisches Patentamt**
**European Patent Office**
**Office européen des brevets**

(11) **EP 4 563 365 A1**

(12) **EUROPEAN PATENT APPLICATION**
published in accordance with Art. 153(4) EPC

(43) Date of publication:
**04.06.2025 Bulletin 2025/23**

(21) Application number: **23846257.6**

(22) Date of filing: **13.07.2023**

(51) International Patent Classification (IPC):
**B41M 5/00** *(2006.01)*     **B41J 2/01** *(2006.01)*
**B41J 2/21** *(2006.01)*     **C09D 11/322** *(2014.01)*

(52) Cooperative Patent Classification (CPC):
**B41J 2/01; B41J 2/21; B41M 5/00; C09D 11/322**

(86) International application number:
**PCT/JP2023/025911**

(87) International publication number:
**WO 2024/024526 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022122181**

(71) Applicant: **FUJIFILM Corporation**
**Tokyo 106-8620 (JP)**

(72) Inventors:
• **IKOSHI, Masao**
**Ashigarakami-gun, Kanagawa 258-8577 (JP)**
• **SATO, Ayato**
**Ashigarakami-gun, Kanagawa 258-8577 (JP)**
• **HOUJOU, Hiroaki**
**Ashigarakami-gun, Kanagawa 258-8577 (JP)**

(74) Representative: **Klunker IP**
**Patentanwälte PartG mbB**
**Destouchesstraße 68**
**80796 München (DE)**

(54) **IMAGE RECORDING METHOD AND IMAGE RECORDING DEVICE**

(57) An image recording method includes: a recording step of recording a white image by applying a white ink containing water and a white pigment onto one surface of a non-permeable substrate by an ink jet method; and a winding step of winding the non-permeable substrate on which the white image is recorded in a state where a tension is applied, and, with the proviso that a surface energy difference between the other surface of the non-permeable substrate and a surface of the white image is represented by $\Delta E$ in units of $mJ/m^2$ and the tension is represented by P in units of N/m, a $\Delta E/P$ ratio which is a value obtained by dividing $\Delta E$ by P is 0.06 to 0.60.

## FIG. 1

EP 4 563 365 A1

**Description**

**BACKGROUND OF THE INVENTION**

1. Field of the Invention

The present disclosure relates to an image recording method and an image recording apparatus.

2. Description of the Related Art

In the related art, various studies have been conducted on an image recording method.
For example, JP2018-165314A discloses, as an aqueous inkjet ink composition capable of obtaining a recorded material which is excellent in rub resistance and sticking resistance while ensuring jetting stability during recording, an aqueous inkjet ink composition containing resin fine particles, a nonionic surfactant, a resin-soluble solvent, and water, in which a total acid value of an acid value of the resin fine particles and an acid value of a dispersant resin in a case where the aqueous inkjet ink composition contains the dispersant resin is 200 (mgKOH/100 g ink) or less.

**SUMMARY OF THE INVENTION**

In image recording in which a white image is recorded by applying a white ink onto a non-permeable substrate by an ink jet method and the non-permeable substrate on which the white image is recorded is wound, it may be required to suppress blocking of the white image.
However, as a result of studies conducted by the present inventors, it was found that in a case where blocking of the white image is attempted to be suppressed in the image recording, winding deviation of the non-permeable substrate is likely to occur.
Therefore, in the image recording, it may be required to suppress the blocking of the white image and the winding deviation of the non-permeable substrate.
Here, the blocking of the white image means that the white image is attached to the back surface of the image of the non-permeable substrate in contact with a surface of the white image after the non-permeable substrate on which the white image is recorded is wound.
In addition, the winding deviation of the non-permeable substrate means a phenomenon in which a position of the non-permeable substrate to be wound is gradually deviated in an axial direction of the winding as the non-permeable substrate on which the white image is recorded is wound.
The present disclosure has been made in view of such circumstances, and an object of the present disclosure is to provide an image recording method and an image recording apparatus that can suppress blocking of a white image and winding deviation of a non-permeable substrate in a case where a white image is recorded on the non-permeable substrate and the non-permeable substrate on which the white image is recorded is wound.
The present disclosure includes the following aspects.

<1> An image recording method comprising:

a recording step of recording a white image by applying a white ink containing water and a white pigment onto one surface of a non-permeable substrate by an ink jet method; and
a winding step of winding the non-permeable substrate on which the white image is recorded in a state where a tension is applied,
in which, with the proviso that a surface energy difference between the other surface of the non-permeable substrate and a surface of the white image is represented by $\Delta E$ in units of mJ/m$^2$ and the tension is represented by P in units of N/m, a $\Delta E/P$ ratio which is a value obtained by dividing $\Delta E$ by P is 0.06 to 0.60.

<2> The image recording method according to <1>,
in which the recording step further includes recording a colored image by applying a colored ink containing water and a coloring pigment onto the one surface of the non-permeable substrate by an ink jet method.
<3> The image recording method according to <2>,
in which the colored image is recorded before the white image so that the colored image is disposed between the one surface of the non-permeable substrate and the white image.
<4> The image recording method according to any one of <1> to <3>,
in which the $\Delta E$ is 5.0 to 25.0.
<5> The image recording method according to any one of <1> to <4>,

in which the P is 30 to 150.

<6> The image recording method according to any one of <1> to <5>,

in which the ΔE/P ratio is 0.10 to 0.50.

<7> The image recording method according to any one of <1> to <6>, further comprising:

before the recording step, a step of applying a pretreatment liquid containing water and an aggregating agent onto the one surface of the non-permeable substrate,

in which, in the recording step, the white ink is applied onto a region on the one surface onto which the pretreatment liquid has been applied, to record the white image.

<8> An image recording apparatus for use in the image recording method according to any one of <1> to <7>, comprising:

a recording unit that includes an ink jet head for applying the white ink onto the one surface of the non-permeable substrate, and performs the recording step of recording the white image on the one surface of the non-permeable substrate; and

a winding unit that includes a winding device that winds the non-permeable substrate on which the white image has been recorded in a state where a tension is applied, and performs the winding step,

in which the ΔE/P ratio is 0.06 to 0.60.

According to an embodiment of the present disclosure, there are provided an image recording method and an image recording apparatus that can suppress blocking of a white image and winding deviation of a non-permeable substrate in a case where the white image is recorded on the non-permeable substrate and the non-permeable substrate on which the white image is recorded is wound.

## BRIEF DESCRIPTION OF THE DRAWINGS

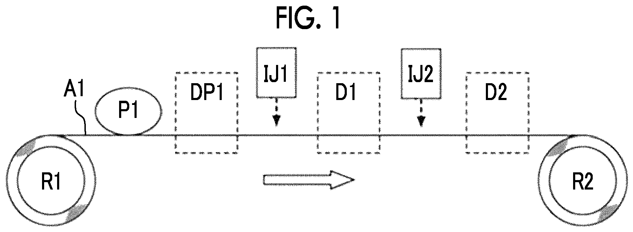

Fig. 1 is a diagram conceptually showing an example of an image recording apparatus used for performing an image recording method according to the present disclosure.

## DESCRIPTION OF THE PREFERRED EMBODIMENTS

In the present disclosure, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present disclosure, in a case in which a plurality of substances corresponding to respective components in a composition are present, the amount of the respective components in the composition means the total amount of the plurality of substances present in the composition unless otherwise specified.

In the present disclosure, a combination of two or more preferred aspects is a more preferred aspect.

In the present disclosure, the meaning of the term "step" includes not only an independent step but also a step whose intended purpose is achieved even in a case in which the step is not clearly distinguished from other steps.

In the present disclosure, "image" means an ink film itself in a case where a pretreatment liquid is not used, and means a laminated film of a pretreatment liquid film and an ink film in a case where the pretreatment liquid is used.

In the present disclosure, "image recording" means formation of the image.

The concept of "image" in the present disclosure also includes a solid image.

In the present disclosure, a description of "applying an ink onto a substrate" includes an aspect of directly applying the ink onto a front surface of the substrate, and for example, in a case where a layer A is formed on the substrate, an aspect of directly applying the ink onto a surface of the layer A.

In the present disclosure, "upstream side" means an upstream side of a non-permeable substrate in a transport direction unless otherwise specified, and "downstream side" means a downstream side of a non-permeable substrate in the transport direction unless otherwise specified.

[Image Recording Method]

An image recording method according to the present disclosure (hereinafter also referred to as "recording method") is an image recording method comprising:

a recording step of recording a white image by applying a white ink containing water and a white pigment onto one surface (hereinafter also referred to as "front surface") of a non-permeable substrate by an ink jet method; and

a winding step of winding the non-permeable substrate on which the white image is recorded in a state where a tension is applied, and

in a case where a surface energy difference between the other surface (hereinafter also referred to as "back surface") of the non-permeable substrate and a surface of the white image is represented by $\Delta E$ in units of mJ/m$^2$ and the tension is represented by P in units of N/m, a $\Delta E$/P ratio which is a value obtained by dividing $\Delta E$ by P is 0.06 to 0.60.

According to the recording method of the present disclosure, it is possible to suppress blocking of the white image and winding deviation of the non-permeable substrate in a case where the white image is recorded on the non-permeable substrate and the non-permeable substrate on which the white image is recorded is wound.

The reason why such an effect is obtained is presumed as follows.

The reason why blocking of the white image can be suppressed is presumed as follows.

$\Delta E$, which is a surface energy difference between the back surface of the non-permeable substrate and surface of the white image in units of mJ/m$^2$ (hereinafter, also referred to as "surface energy difference $\Delta E$"), is advantageous for suppressing blocking of the white image as the value thereof is larger. The reason for this is that, as the surface energy difference $\Delta E$ increases, the affinity between the back surface of the non-permeable substrate and the white image in contact with the back surface after the winding decreases.

On the other hand, in a case where the non-permeable substrate on which the white image is recorded is wound, the smaller the tension (that is, P (hereinafter, also referred to as "tension P")) value applied to the non-permeable substrate in units of N/m, the more advantageous it is for suppressing blocking of the white image. The reason for this is that, as the tension P is smaller, the winding tightness of the non-permeable substrate is weaker, and as a result, in the wound non-permeable substrate, the force of pressing between the back surface of the non-permeable substrate and the white image in contact with the back surface is weaker.

As described above, the larger the $\Delta E$/P ratio which is a value obtained by dividing $\Delta E$ by P is, the more advantageous it is for suppressing blocking of the white image.

Specifically, in the recording method of the present disclosure, the blocking of the white image is suppressed by setting the $\Delta E$/P ratio to 0.06 or more.

The reason why the winding deviation of the non-permeable substrate can be suppressed is presumed as follows.

The smaller the value of the surface energy difference $\Delta E$, the more advantageous it is for the winding deviation of the non-permeable substrate. The reason for this is that, as the surface energy difference $\Delta E$ is smaller, the affinity between the back surface of the non-permeable substrate and the white image in contact with the back surface after the winding increases, and the back surface and the white image are less likely to be deviated.

On the other hand, the larger the value of the tension P is, the more advantageous it is for the winding deviation of the non-permeable substrate. The reason for this is that, as the tension P is larger, the winding tightness of the non-permeable substrate is stronger, and as a result, the force of pressing against each other between the back surface of the non-permeable substrate and the white image in contact with the back surface after the winding is stronger.

As described above, the larger the $\Delta E$/P ratio which is a value obtained by dividing $\Delta E$ by P is, the more advantageous it is for suppressing the winding deviation of the non-permeable substrate.

Specifically, in the recording method of the present disclosure, the winding deviation of the non-permeable substrate is suppressed by setting the $\Delta E$/P ratio to 0.60 or less.

<$\Delta E$/P Ratio>

As described above, the $\Delta E$/P ratio in the present disclosure is 0.06 to 0.60.

The $\Delta E$/P ratio is preferably 0.10 to 0.50.

In a case where the $\Delta E$/P ratio is 0.10 or more, blocking of the white image is further suppressed.

In a case where the $\Delta E$/P ratio is 0.50 or less, the winding deviation of the non-permeable substrate is further suppressed.

<Surface Energy Difference ΔE>

The surface energy difference ΔE is a surface energy difference between the back surface of the non-permeable substrate and surface of the white image.

Here, the surface energy difference ΔE is obtained by the following expression based on

dispersion component $\gamma_S^d(1)$ of the surface energy of the back surface of the non-permeable substrate,
hydrogen bonding component $\gamma_S^h(1)$ of the surface energy of the back surface of the non-permeable substrate,
dispersion component $\gamma_S^d(2)$ of the surface energy of the white image, and
hydrogen bonding component $\gamma_S^h(2)$ of the surface energy of the white image.

$$\Delta E = ((\gamma_S^d(2) - \gamma_S^d(1))^2 + (\gamma_S^h(2) - \gamma_S^h(1))^2)^{1/2}$$

The surface energy difference ΔE is not particularly limited as long as the ΔE/P ratio is within the above-described range.

The surface energy difference ΔE is, for example, 35.0 or less, preferably 1.0 to 30.0, more preferably 5.0 to 25.0, and still more preferably 7.0 to 24.0.

<Method of Measuring Surface Energy (Hydrogen Bonding Component and Dispersion Component)>

In the present disclosure, the surface energy (hydrogen bonding component and dispersion component) of the solid surface (that is, each of the back surface of the non-permeable substrate and the surface of the white image) means a value calculated by the Owens-Wendt method.

The surface energy of the white image is measured by recording the white image on the non-permeable substrate using the same white ink as the white ink in the recording step under the same conditions as the conditions in the recording step, and using the non-permeable substrate (hereinafter, also referred to as an "image sample") on which the white image is recorded.

The contact angle of water and the contact angle of diiodomethane, which will be described later, are measured within 30 minutes after the preparation of the image sample (that is, after the completion of drying of the ink).

The surface energy of the back surface of the non-permeable substrate is measured using the back surface itself of the non-permeable substrate used in the recording step.

The contact angles of water and diiodomethane with respect to the solid surface (that is, the surface of the white image in the image sample or the back surface of the non-permeable substrate) are measured with a contact angle meter.

As the contact angle meter, for example, "DM-501" (product name, manufactured by Kyowa Interface Science Co., Ltd.) can be used.

The surface energy of the solid surface is calculated by the Owens-Wendt method using the measured values of the contact angles of water and diiodomethane with respect to the solid surface, and the dispersion component of water and diiodomethane and the hydrogen bonding component.

The Owens-Wendt Method is described in D. K. Owens and R. C. Wendt, Journal of applied polymer science Vol. 13, PP. 1741 to 1747 (1969).

Hereinafter, a specific calculation method will be described.

In a case where a liquid is added dropwise to a solid surface, the following expression is satisfied for each parameter at an interface between the solid surface and the liquid.

Equation 1 described below is known as the Young's equation.

Equation 2 described below is known as the Dupre equation.

Equation 3, Equation 4, and Equation 5 described below are known as equations using the Owens-Wendt method.

$$\gamma_S = \gamma_L \cos\theta + \gamma_{SL} \dots (1)$$

$$W = \gamma_S + \gamma_L - \gamma_{SL} \dots (2)$$

$$\gamma_S = \gamma_S^d + \gamma_S^h \dots (3)$$

$$\gamma_L = \gamma_L^d + \gamma_L^h \dots (4)$$

$$W = 2(\gamma_S{}^d\gamma_L{}^d)^{1/2} + 2(\gamma_S{}^h\gamma_L{}^h)^{1/2} \ \dots \ (5)$$

In Equation 1 to Equation 5, the details of each symbol are as follows.

$\theta$ ... contact angle of liquid with solid surface

$\gamma_S$ ... surface energy of solid surface

$\gamma_L$ ... surface energy of liquid

$\gamma_{SL}$ ... interface energy between solid surface and liquid

W ... work of adhesion

$\gamma_S{}^d$ ... dispersion component of surface energy of solid surface

$\gamma_S{}^h$ ... hydrogen bonding component of surface energy of solid surface

$\gamma_L{}^d$ ... dispersion component of surface energy of liquid

$\gamma_L{}^h$ ... hydrogen bonding component of surface energy of liquid

Equation 6 described below is obtained from Equation 1 to Equation 5 described above.

$$(\gamma_S{}^d\gamma_L{}^d)^{1/2} + (\gamma_S{}^h\gamma_L{}^h)^{1/2} = \gamma_L(1 + \cos\theta)/2 \ \dots \ (6)$$

Equation 6A and Equation 6B are established using water and diiodomethane as the liquid in Equation 6.

$$(\gamma_S{}^d\gamma_{L1}{}^d)^{1/2} + (\gamma_S{}^h\gamma_{L1}{}^h)^{1/2} = \gamma_{L1}(1 + \cos\theta1)/2 \ \dots \ (6A)$$

$$(\gamma_S{}^d\gamma_{L2}{}^d)^{1/2} + (\gamma_S{}^h\gamma_{L2}{}^h)^{1/2} = \gamma_{L2}(1 + \cos\theta2)/2 \ \dots \ (6B)$$

In Equation 6A and Equation 6B, the details of each symbol are as follows.

$\theta1$ ... contact angle of water with solid surface

$\theta2$ ... contact angle of diiodomethane with solid surface

$\gamma_{L1}$ ... surface energy (72.8 mN/m) of water

$\gamma_{L1}{}^d$ ... dispersion component (21.8 mN/m) of surface energy of water

$\gamma_{L1}{}^h$ ... hydrogen bonding component (51.0 mN/m) of surface energy of water

$\gamma_{L2}$ ... surface energy (50.8 mN/m) of diiodomethane

$\gamma_{L2}{}^d$ ... dispersion component (50.8 mN/m) of surface energy of diiodomethane

$\gamma_{L2}{}^h$ ... hydrogen bonding component (0 mN/m) of surface energy of diiodomethane

The values in parentheses are values described in the document.

$\theta1$, $\theta2$, $\gamma_{L1}$, $\gamma_{L1}{}^d$, $\gamma_{L1}{}^h$, $\gamma_{L2}$, $\gamma_{L2}{}^d$, and $\gamma_{L2}{}^h$ are substituted into Equation 6A and Equation 6B, whereby $\gamma_S{}^d$ and $\gamma_S{}^h$ are calculated.

As $\theta1$ and $\theta2$, the measured values by the above-described measurement method are used.

By substituting the calculated $\gamma_S{}^d$ and $\gamma_S{}^h$ into Equation 3, the surface energy $\gamma_S$ of the solid surface can be calculated.

The surface energy of the back surface of the non-permeable substrate and the surface energy of the surface of the white image are not particularly limited as long as the above-described $\Delta E/P$ ratio range is satisfied.

The surface energy $\gamma_S$ of the back surface of the non-permeable substrate is, for example, 30.0 mJ/m$^2$ to 50.0 mJ/m$^2$.

The dispersion component $\gamma_S{}^d$ of the surface energy of the back surface of the non-permeable substrate is, for example, 30.0 mJ/m$^2$ to 50.0 mJ/m$^2$.

The hydrogen bonding component $\gamma_S{}^h$ of the surface energy of the back surface of the non-permeable substrate is, for example, 0 mJ/m$^2$ to 3.0 mJ/m$^2$.

The surface energy $\gamma_S$ of the white image is, for example, 35.0 mJ/m$^2$ to 80.0 mJ/m$^2$.

The dispersion component $\gamma_S{}^d$ of the surface energy of the white image is, for example, 30.0 mJ/m$^2$ to 50.0 mJ/m$^2$.

The hydrogen bonding component $\gamma_S{}^h$ of the surface energy of the white image is, for example, 5.0 mJ/m$^2$ to 30.0 mJ/m$^2$.

<Tension P>

In the present disclosure, the tension P (that is, the tension expressed in units of N/m in a case where the non-permeable substrate is wound) means the tension of the non-permeable substrate just in front of (specifically, in a region within a distance of 1 m from the winding device) a winding device that winds the non-permeable substrate on which the white image is recorded (hereinafter, also referred to as "tension P at a winding unit").

The tension P (unit: N/m) in the present disclosure means a value measured by a tension meter.

The tension P is not particularly limited as long as the ΔE/P ratio is within the above-described range.

The tension P is, for example, 20 to 160, preferably 30 to 150, more preferably 35 to 100, and still more preferably 40 to 80.

In the recording method of the present disclosure, a tension may be applied to a region upstream of the winding unit (for example, a region to which the ink is applied), which is more than 1 m from the winding unit, in the non-permeable substrate.

In this case, the tension P and the tension of the region on the upstream side may be the same as or different from each other.

<Recording Step>

The recording method of the present disclosure includes a recording step of recording a white image by applying a white ink containing water and a white pigment onto a front surface of a non-permeable substrate by an ink jet method.

(Non-Permeable Substrate)

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of a material of the non-permeable substrate include glass, a metal (such as aluminum, zinc, and copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, and an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of impermeable fibers, in addition to the sheet-like (film-like) or plate-like non-permeable substrate.

A thickness of the non-permeable substrate is preferably 0.1 μm to 1,000 μm, more preferably 0.1 μm to 800 μm, and still more preferably 1 μm to 500 μm.

At least one of the front surface or the back surface of the non-permeable substrate may be subjected to a surface treatment.

Examples of the surface treatment include a corona treatment, a plasma treatment, a flame treatment, a heat treatment, an abrasion treatment, a light irradiation treatment (such as a UV treatment), and a flame treatment, but the surface treatment is not limited thereto. The corona treatment can be performed, for example, using CORONA MASTER (product name "PS-10S", manufactured by Shinko Electric & Instrumentation Co., Ltd.).

The conditions for the surface treatment may be appropriately selected depending on the kind of the non-permeable substrate and the like.

In addition, the surface energy of the back surface of the non-permeable substrate may be adjusted depending on whether or not the back surface of the non-permeable substrate is subjected to the surface treatment and the conditions for the surface treatment in a case of performing the surface treatment, and thus, the ΔE and the ΔE/P ratio may be adjusted.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image back surface side of the non-permeable substrate.

For example, in a case where the non-permeable substrate is a non-permeable substrate having transparency, in a case where a colored image, which is a pattern image such as a character or a figure, and a white image (for example, a solid image) as a background image are recorded on the non-permeable substrate in this order as viewed from the non-permeable substrate side, the colored image (for example, a pattern image such as a character or a figure) having the white image (for example, a solid image) as a background is easily visually recognized through the non-permeable substrate from the image back surface side of the non-permeable substrate.

In the present disclosure, the "colored" in the colored ink and the coloring pigment means a chromatic color (for example, cyan, magenta, yellow, and the like) or a black color (hereinafter, also referred to as black).

(White Ink)

In the recording step, a white image is recorded by applying a white ink onto the front surface of the non-permeable substrate by an ink jet method.

The white ink contains water and a white pigment.

Hereinafter, the white ink will be described.

-Water-

The white ink contains water.

A content of the water is preferably 10% by mass or more, more preferably 20% by mass or more, still more preferably 30% by mass or more, and particularly preferably 50% by mass or more with respect to the total amount of the white ink.

The upper limit of the content of the water is appropriately determined according to contents of other components, and is, for example, 99% by mass, preferably 95% by mass, and more preferably 90% by mass with respect to the total amount of the white ink.

-White Pigment-

The white ink contains a white pigment.

Examples of the white pigment include inorganic pigments such as titanium dioxide, barium sulfate, calcium carbonate, silica, zinc oxide, zinc sulfide, mica, talc, and pearl.

The white pigment is preferably titanium dioxide, barium sulfate, calcium carbonate, or zinc oxide, and more preferably titanium dioxide.

From the viewpoint of covering property, an average primary particle diameter of the white pigment is preferably 150 nm or more, and more preferably 200 nm or more. In addition, from the viewpoint of j ettability of the ink, the average primary particle diameter of the white pigment is preferably 400 nm or less, and more preferably 350 nm or less.

Here, the covering property means a performance of covering a base (for example, the front surface of the non-permeable substrate or the colored image recorded on the front surface before the white image) on which the white image is formed, with the white image.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.

In a case where the ink contains the white pigment, from the viewpoint of image density and jettability, a content of the white pigment is preferably 2% by mass to 25% by mass, more preferably 5% by mass to 25% by mass, and still more preferably 10% by mass to 20% by mass with respect to the total amount of ink.

-Resin-

The white ink may contain at least one resin.

The resin in the white ink contributes to the film forming property of the white ink (that is, the film forming property of the white ink film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mm ID x 15 cm, manufactured by Tosoh Corporation) are used as a column, and tetrahydrofuran (THF) is used as an eluant. In addition, as the measurement conditions, a sample concentration of 0.45% by mass, a flow rate of 0.35 ml/min, a sample injection amount of 10 $\mu$l, and a measurement temperature of 40°C are set, and an RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Examples of the resin include a pigment dispersing resin as a pigment dispersing agent.

Examples of the resin also include resin particles.

The white ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the white ink contains the pigment dispersing resin, a ratio of a content of the pigment and a content of the pigment dispersing resin in the ink is preferably 1:0.04 to 1:3, more preferably 1:0.05 to 1:1, and still more preferably 1:0.05 to 1:0.5 on a mass basis.

In a case where the white ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

The white ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is employed as the glass transition temperature (Tg) of the resin particles. For a measurement method of the measurement Tg, paragraph 0111 of JP2015-25076A can be referred to.

For the resin particles, for example, descriptions described in paragraphs 0038 to 0114 of WO2021/192720A and paragraphs 0109 to 0120 of JP2015-25076A may be referred to.

In a case where the white ink contains the resin particles, a content of the resin particles in the white ink is preferably 1% by mass to 20% by mass, more preferably 2% by mass to 15% by mass, and still more preferably 2% by mass to 10% by mass with respect to the total amount of the white ink.

-Water-soluble organic solvent-

It is preferable that the white ink contains at least one water-soluble organic solvent.

In this manner, jetting stability from the ink jet head is ensured.

The water-soluble organic solvent contained in the white ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the white ink is not limited, and examples thereof include;

monoalcohol having 1 to 4 carbon atoms;
diol such as 1,2-ethanediol (also known as ethylene glycol), 1,3-propanediol (also known as propylene glycol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triol such as glycerin, 1,2,6-hexanetriol, and trimethylolpropane;
alkylene glycol monoalkyl ether such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, and polyoxyethylene polyoxypropylene glycol;
polyalkylene glycol ether such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

From the viewpoint of jetting stability, the water-soluble organic solvent in the white ink preferably contains at least one selected from the group consisting of a diol and an alkylene glycol monoalkyl ether.

A content of the water-soluble organic solvent is preferably 10% by mass to 40% by mass and more preferably 15% by mass to 30% by mass with respect to the total amount of the white ink.

-Surfactant-

The white ink may contain at least one kind of surfactant.

Examples of the surfactant include a nonionic surfactant, a cationic surfactant, an anionic surfactant, and a betaine surfactant.

Preferred examples of the surfactant include an acetylene glycol-based surfactant, which is a kind of a nonionic surfactant.

As the acetylene glycol-based surfactant, for example, the acetylene glycol-based surfactants described in paragraphs 0070 to 0080 of WO2017/149917A can be used.

Examples of the acetylene glycol-based surfactant include

a polyalkylene oxide adduct (preferably a polyethylene oxide adduct) of 2,4,7,9-tetramethyl-5-decyne-4,7-diol,
a polyalkylene oxide adduct (preferably a polyethylene oxide adduct) of 3,6-dimethyl-4-octyne-3,6-diol,
a polyalkylene oxide adduct (preferably a polyethylene oxide adduct) of 2,5,8,11-tetramethyl-6-dodecyne-5,8-diol, and
a polyalkylene oxide adduct (preferably a polyethylene oxide adduct) of 2,5-dimethyl-3-hexyne-2,5-diol.

Examples of commercially available products of the acetylene glycol-based surfactant include the SURFYNOL Series (such as SURFYNOL 420, SURFYNOL 440, SURFYNOL 465, and SURFYNOL 485), OLFINE Series (such as OLFINE E1010 and OLFINE E1020), and DYNOL Series (such as DYNOL 604) (all manufactured by Air Products and Chemicals Inc. or Nissin Chemical Co., Ltd.), and ACETYLENOL (manufactured by Kawaken Fine Chemicals Co., Ltd.).

Commercially available products of the acetylene glycol-based surfactants are also provided by the Dow Chemical Company, General Aniline & Film Corporation, and the like.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine-based (fluorinated alkyl-based) surfactants and silicone-based surfactants described in JP2003-322926A, JP2004-325707A, and JP2004-309806A.

In a case where the white ink contains a surfactant, the content of the surfactant in the white ink is appropriately adjusted in consideration of the surface energy of the white image to be recorded.

The content of the surfactant in the white ink is preferably in a range of 0.01% by mass to 5% by mass, more preferably in a range of 0.05% by mass to 3% by mass, and still more preferably in a range of 0.1% by mass to 2% by mass with respect to the total amount of the white ink.

-Other Components-

The white ink may contain components other than the components described above.

Examples of other components include known additives such as a silicic acid compound (such as silicic acid compounds described in paragraphs 0058 to 0075 of JP5430316B), urea, a urea derivative, a wax, a fading inhibitor, an emulsion stabilizer, a penetration enhancer, an ultraviolet absorbing agent, a preservative, a fungicide, a pH adjuster, an antifoaming agent, a viscosity adjuster, a dispersion stabilizer, and a chelating agent.

-Physical Properties-

From the viewpoint of improving the jetting stability, the pH (25°C) of the white ink is preferably in a range of 7 to 10 and more preferably in a range of 7.5 to 9.5. The pH of the ink can be measured by the same method as that for the pH of the pretreatment liquid.

The viscosity (25°C) of the white ink is preferably in a range of 0.5 mPa·s to 30 mPa·s, more preferably in a range of 2 mPa·s to 20 mPa·s, preferably in a range of 2 mPa·s to 15 mPa·s, and even still more preferably in a range of 3 mPa·s to 10 mPa·s.

The viscosity of the white ink is measured at 25°C using a viscometer, for example, a TV-22 type viscometer manufactured by Toki Sangyo Co., Ltd.

The surface tension (25°C) of the white ink is preferably 60 mN/m or less, more preferably in a range of 20 mN/m to 50 mN/m, and still more preferably in a range of 25 mN/m to 40 mN/m.

The surface tension is measured at 25°C using a surface tension meter, for example, by a plate method using an automatic surface tension meter (trade name, "CBVP-Z") manufactured by Kyowa Interface Science Co., Ltd.

(Application of White Ink)

In the recording step, a white image is recorded by applying a white ink onto the front surface of the non-permeable substrate by an ink jet method.

The ejection method of the white ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam and irradiating the ink with the acoustic beam to jet the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to be subjected to a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the white ink onto the non-permeable substrate by the ink jet recording method is performed by jetting the white ink from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

It is preferable that the application of the white ink is performed using an ink jet head having a resolution of 300 dpi or greater (more preferably 600 dpi or greater and still more preferably 800 dpi or greater). Here, dpi is an abbreviation for dot per inch, and 1 inch is 2.54 cm.

From the viewpoint of obtaining a high-definition image, the ink droplet amount of the white ink is preferably in a range of 1 picoliter (pL) to 10 pL and more preferably in a range of 1.5 pL to 6 pL.

(Drying of White Ink)

In the recording step, the white ink applied onto the front surface of the non-permeable substrate may be dried to obtain a white image.

A method for drying the white ink is not particularly limited, and examples thereof include infrared (IR) drying, hot air drying (for example, a dryer and the like), and heating and drying with a heating device (for example, a heater, a hot plate, a heating furnace, and the like).

The method of heating and drying may be a method of combining two or more of the above-described methods.

The heating and drying can be performed by heating the white ink from at least one of the front surface side or the back surface side of the non-permeable substrate.

A heating temperature in the heating and drying of the white ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

A heating time in the heating and drying of the white ink is not particularly limited, but is preferably 1 second to 180 seconds, more preferably 1 second to 120 seconds, and still more preferably 1 second to 60 seconds.

(Recording of Colored Image)

The recording step may further include recording a colored image by applying a colored ink containing water and a coloring pigment onto the front surface of the non-permeable substrate by an ink jet method.

According to this aspect, a multicolor image including a white image and a colored image can be recorded on the front surface of the non-permeable substrate.

In this aspect, only one colored image may be recorded using only one kind of colored ink (for example, one of a cyan image, a magenta image, a yellow image, or a black image), or two or more colored images may be recorded using two or more kinds of colored inks (for example, two or more of a cyan image, a magenta image, a yellow image, or a black image).

The colored image may be recorded before the white image or may be recorded after the white image.

Examples of the aspect in which the colored image is recorded before the white image include an aspect in which the colored image (for example, a pattern image such as a character or a figure) is disposed between the front surface of the non-permeable substrate and the white image (for example, a solid image). This aspect is an aspect in which a colored image (for example, a pattern image such as a character or a figure) having a white image (for example, a solid image) as a background is visually recognized through the non-permeable substrate from the back surface side of the non-permeable substrate.

An example of the aspect in which the colored image is recorded after the white image is an aspect in which the colored image (for example, a pattern image such as a character or a figure) is disposed on the white image (for example, a solid image). This aspect is an aspect in which a colored image (for example, a pattern image such as a character or a figure) on the upper layer side is visually recognized with a white image (for example, a solid image) on the lower layer side as a background from the front surface side of the non-permeable substrate.

From the viewpoint of more effectively suppressing blocking of the multicolor image including the white image and the colored image, an aspect in which the colored image is recorded before the white image and is disposed between the front surface of the non-permeable substrate and the white image is preferable.

In such an aspect, the contact area between the white image and the back surface of the non-permeable substrate is larger than that in the aspect in which the colored image is recorded after the white image and the colored image is disposed on the white image, and thus the blocking of the multicolor image is more effectively suppressed.

-Colored Ink-

The colored ink used for recording the colored image contains water and a coloring pigment (that is, a chromatic or black pigment).

The preferred aspect of the colored ink is the same as the preferred aspect of the white ink described above, except for the type of the pigment.

Any of commercially available organic pigment or inorganic pigment may be used as the coloring pigment.

Examples of the coloring pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the coloring pigment may be a water-insoluble pigment which can be dispersed in water by a dispersing agent, or may be a self-dispersing pigment.

The self-dispersing pigment is a pigment which can be dispersed in water without using a dispersing agent.

The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.

From the viewpoint of the density of the colored image and the j ettability of the colored ink, the content of the coloring pigment in the colored ink is preferably 1% by mass to 20% by mass, more preferably 1% by mass to 15% by mass, and still more preferably 1% by mass to 10% by mass with respect to the total amount of the ink.

<Pretreatment Liquid Applying Step>

The recording method of the present disclosure may further include, before the recording step, a step of applying (hereinafter, also referred to as a "pretreatment liquid applying step") a pretreatment liquid containing water and an aggregating agent onto the front surface of the non-permeable substrate.

In this case, in the recording step, the white image is recorded by applying the white ink described above onto a region on the front surface onto which the pretreatment liquid has been applied.

In the aspect including the pretreatment liquid applying step, the components of the white ink are aggregated by the action of the aggregating agent applied in advance on the front surface, which is advantageous in terms of the image quality of the white image.

In the aspect including the pretreatment liquid applying step, the colored image described above may be recorded in addition to the white image.

In this case, the colored image is recorded by applying the colored ink described above onto the region on the front surface onto which the pretreatment liquid has been applied. As a result, the components of the colored ink are aggregated by the action of the aggregating agent, which is advantageous in terms of the image quality of the colored image.

As described above, the colored image may be recorded on the upper layer side of the white image (the side away from the non-permeable substrate) or may be recorded on the lower layer side of the white image (the side close to the non-permeable substrate, that is, between the front surface of the non-permeable substrate and the white image).

(Pretreatment Liquid)

The pretreatment liquid contains water and an aggregating agent.

-Water-

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

-Aggregating Agent-

The pretreatment liquid contains at least one aggregating agent.

The aggregating agent in the pretreatment liquid aggregates the components in the ink on the non-permeable substrate. As a result, image quality of the image can be improved.

It is preferable that the aggregating agent is at least one selected from the group consisting of an organic acid, a polyvalent metal compound, a metal complex, and a cationic polymer.

Preferred examples of the aggregating agent also include aggregating agents described in paragraphs 0122 to 0130 of WO2020/195360A.

Hereinafter, preferred aspects of each of the organic acid, the polyvalent metal compound, the metal complex, and the cationic polymer, which can be used as the aggregating agent, will be described.

--Organic Acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, as the acidic group, a phosphoric acid group or a carboxy group is preferable, and a carboxy group is more preferable.

It is preferable that at least a part of the acidic group is dissociated in the pretreatment liquid.

Examples of the organic compound having a carboxy group, include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of aggregation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent Metal Compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counter-ions in the pretreatment liquid.

--Metal Complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

--Cationic Polymer--

It is preferable that the cationic polymer is a homopolymer of a cationic monomer having a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of viscosity of the pretreatment liquid, it is preferable that a weight-average molecular weight of the cationic polymer is small. In a case where the pretreatment liquid is applied onto a resin substrate by an ink jet recording method, the weight-average molecular weight thereof is preferably 1,000 to 500,000, more preferably 1,500 to 200,000, and still more preferably 2,000 to 100,000. It is advantageous that the weight-average molecular weight thereof is 1,000 or more from the viewpoint of aggregation rate. It is advantageous that the weight-average molecular weight thereof is 500,000 or less from the viewpoint of jetting reliability. However, the weight-average molecular weight thereof is not limited thereto in a case where the pretreatment liquid is applied onto a resin substrate by a method other than the ink jet recording method.

A content of the aggregating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

-Resin-

The pretreatment liquid may contain at least one resin.

The resin in the pretreatment liquid contributes to the film forming property of the pretreatment liquid (that is, the formability of film by the pretreatment liquid).

As the resin in the pretreatment liquid, the same resin as the resin in the ink (for example, the resin particles) can be used.

A content of the resin in the pretreatment liquid is not particularly limited.

The content of the resin is preferably 0.5% by mass to 30% by mass, more preferably 1% by mass to 20% by mass, and particularly preferably 1% by mass to 15% by mass with respect to the total amount of the pretreatment liquid.

-Water-soluble organic solvent-

The pretreatment liquid may contain at least one water-soluble organic solvent.

As the water-soluble organic solvent in the pretreatment liquid, the same water-soluble organic solvent as the water-soluble organic solvent which can be contained in the ink can be used.

-Additive-

The ink may contain an additive such as a surfactant, a water-soluble resin, a co-sensitizer, an ultraviolet absorbing agent, an antioxidant, a fading inhibitor, a conductive salt, and a basic compound, as necessary.

-Physical Properties-

A pH of the pretreatment liquid is preferably 2.0 to 7.0 and more preferably 2.0 to 4.0. The pH of the pretreatment liquid is measured by the same method as in the pH of the ink.

From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension of the pretreatment liquid is measured by the same method as in the surface tension of the ink.

(Method of Applying Pretreatment Liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, a reverse roll coater, or the like.

(Drying of Pretreatment Liquid)

The pretreatment liquid applying step may include drying the pretreatment liquid applied onto the non-permeable substrate.

A method of drying the pretreatment liquid is not particularly limited, but for example, the same method as the method exemplified in the method of drying the white ink can be applied.

A preferred range of drying conditions (for example, the heating temperature and the heating time) of the pretreatment liquid is the same as a preferred range of the drying conditions of the white ink.

<Winding Step>

The recording method according to the present disclosure includes a winding step of winding the non-permeable substrate on which the white image is recorded in a state where the tension P is applied.

The winding step is not particularly limited, and can be performed using a known winding device including a winding core.

The recording method of the present disclosure may include other steps in addition to the above-described steps.

<Image Recording Apparatus>

An image recording apparatus which is used for the image recording method according to the present disclosure comprises:

a recording unit that includes an ink jet head for applying the white ink onto the one surface of the non-permeable substrate, and performs the recording step of recording the white image on the one surface of the non-permeable substrate; and

a winding unit that includes a winding device that winds the non-permeable substrate on which the white image has been recorded in a state where a tension is applied, and performs the winding step, and

the ΔE/P ratio is 0.06 to 0.60.

With the image recording apparatus, the same effects as those of the image recording method of the present disclosure are exhibited.

<Example of Image Recording Apparatus>

Fig. 1 is a diagram conceptually showing an example of an image recording apparatus used in an image recording method of the present disclosure.

As shown in Fig. 1, the ink jet recording device according to the present example is an example of an ink jet recording device comprising a transport mechanism that transports a resin substrate in a roll-to-roll method, unwinds a non-permeable substrate A1 having a long film shape wound in a roll shape by an unwinding device R1, transports the unwound non-permeable substrate A1 in a direction of a block arrow in a state where a tension is applied, causes the non-permeable substrate A1 to pass through a pretreatment liquid applying device P1, a pretreatment liquid drying zone DP1, a first ink jet head IJ1, a first drying zone D1, a second ink jet head IJ2, and a drying zone D2 in this order, and finally winds the non-permeable substrate A1 by a winding device R2 including a winding core in a state where a tension P is applied.

The non-permeable substrate A1 is transported in a state where a tension is applied and is wound in a state where a tension P is applied. The tension during the transport may be the same tension as the tension P during the winding or may be a tension different from the tension P. In addition, the tension may vary depending on the position in the transport direction, or may be uniform.

The image recording apparatus according to the present example may comprise a tension adjusting unit for adjusting the tension of the non-permeable substrate.

Examples of the tension adjusting unit include

a powder brake provided in the unwinding device R1 and/or the winding device R2,

a dancer roll provided in the middle of the transport path, and

a control device (for example, a tension controller) that controls each tension by adjusting each condition of the image recording apparatus.

In addition, the image recording apparatus according to the present example may comprise a tension measuring unit (for example, a tension meter) for measuring the tension of the non-permeable substrate.

Since Fig. 1 is a conceptual diagram, the transport path of the non-permeable substrate A1 is simplified and the non-permeable substrate A1 is shown as being transported in one direction, but it is needless to say that, in reality, the transport path of the non-permeable substrate A1 may be meandering.

The method of transporting the non-permeable substrate A1 can be appropriately selected from various web transport methods of using a drum, a roll, and the like.

A pretreatment liquid applying device P1, a pretreatment liquid drying zone DP1, a first ink jet head IJ1, a first drying zone D1, a second ink jet head IJ2, and a drying zone D2 are disposed in this order downstream of the non-permeable substrate A1 in the transport direction with respect to the unwinding device R1 for unwinding the non-permeable substrate A1, in this order from the upstream side of the non-permeable substrate A1 in the transport direction.

The pretreatment liquid, the first ink, and the second ink are respectively applied by the pretreatment liquid applying device P1, the first ink jet head IJ1, and the second ink jet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be performed.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink.

Further, in a case where the resin substrate plate passes through each drying zone in a state where the temperature of each drying zone is set to room temperature, the heating and drying can be omitted.

In the present example, the first ink is any one of a colored ink containing water and a coloring pigment for recording a colored image or a white ink containing water and a white pigment for recording a white image, and the second ink is the other of the colored ink and the white ink.

A surface treatment unit (not shown) for performing a surface treatment (preferably a corona treatment) on at least one of the front surface or the back surface of the non-permeable substrate A1 may be provided upstream of the pretreatment liquid applying device P1.

Further, a cooling zone for cooling the recorded multicolor image (that is, the multicolor image including the white image and the colored image) may be provided downstream of the second drying zone D2.

The first ink jet head IJ1 and the second ink jet head IJ2 may be shuttle heads, but from the viewpoint of increasing the speed of image recording, a line head in which a plurality of jetting ports (nozzles) are arranged on the non-permeable substrate A1 having a long film shape in the width direction is preferable.

Each of the first ink jet head IJ1 and the second ink jet head IJ2 may be used alone or a plurality of kinds thereof.

Examples of a combination of the first ink jet head IJ1 and the second ink jet head IJ2 include a combination in which the first ink jet head IJ1 is formed of four ink jet heads corresponding to four colors of cyan, magenta, yellow, and black (note; these four ink jet heads are arranged in the transport direction of the resin substrate) and the second ink jet head IJ2 is formed of one ink jet head corresponding to white (that is, white).

Further, other examples of the combination of the first ink jet head IJ1 and the second ink jet head IJ2 include a combination in which the first ink jet head IJ1 is formed of one ink jet head corresponding to white (that is, white) and the second ink jet head IJ2 is formed of four ink jet heads corresponding to four colors of cyan, magenta, yellow, and black (note; these four ink jet heads are arranged in the transport direction of the resin substrate).

In the ink jet recording using the image recording apparatus according to the present example,

first, the non-permeable substrate A1 having a long film shape wound in a roll shape is unwound by the unwinding device R1,
the unwound non-permeable substrate A1 is transported in a direction of a block arrow in a state where a tension is applied,
the pretreatment liquid is applied onto the transported non-permeable substrate A1 by the pretreatment liquid applying device P1,
next, the pretreatment liquid is dried in the pretreatment liquid drying zone DP1 as necessary,
next, the first ink (that is, any one of the colored ink or the white ink) is applied by the first ink jet head IJ1,
next, the first ink is dried in the first drying zone D1 as necessary,
next, the second ink (that is, the other of the colored ink or the white ink) is applied by the second ink jet head IJ2, and
next, the second ink is dried in the second drying zone D2 as necessary.

As a result, a multicolor image including the first image (that is, any one of the colored image or the white image) derived from the first ink and the second image (that is, the other of the colored image or the white image) derived from the second ink is obtained.

Next, the obtained multicolor image is cooled as necessary, and finally, the non-permeable substrate A1 with the multicolor image in a state where the tension P is applied is wound by the winding device R2 including the winding core.

In the present example, the $\Delta E/P$ ratio, which is a value obtained by dividing the surface energy difference $\Delta E$ $(mJ/m^2)$ between the back surface of the non-permeable substrate A1 and the surface of the white image by the tension P (N/m), which is the tension immediately in front of the winding device R2, is adjusted to be 0.06 to 0.60.

As a result, in the non-permeable substrate A1 after winding, the winding deviation and the blocking of the white image are suppressed.

In this case, in an aspect in which the first image is a colored image, the second image is a white image (that is, the colored image is recorded before the white image), and the colored image is disposed between the non-permeable substrate and the white image, the white image is on the upper layer side, and thus the entire surface of the white image is in contact with the back surface of the non-permeable substrate. As a result, the contact area between the white image and the back surface of the non-permeable substrate is further increased, and thus the effect of suppressing blocking of the multicolor image is more excellent as compared with a case where the colored image is on the upper layer side.

In the present example, the application and drying of the pretreatment liquid may be omitted.

In addition, in the present example, the colored image may not be recorded, and only the white image may be recorded.

Examples

Hereinafter, examples of the present disclosure will be shown, but the present disclosure is not limited to the following examples.

<Preparation of Pretreatment Liquid>

The components described below were mixed to prepare a pretreatment liquid.

-Composition of Pretreatment Liquid-

· Glutaric acid [aggregating agent]
... 6.1% by mass
· Propylene glycol (PG) [water-soluble organic solvent]
... 20% by mass
· OLFINE E1010 (manufactured by Nissin Chemical Industry Co., Ltd.) [surfactant]
... 0.5% by mass
· SUPERFLEX 500M (manufactured by DKS Co., Ltd.) [aqueous dispersion of urethane resin particles]
... 7.0% by mass
· Triisopropanolamine [pH adjuster]
... 0.2% by mass
· BYK024 (manufactured by BYK-Chemie GmbH) [antifoaming agent]
... 0.01% by mass
· Ultrapure water
... residual amount set such that total amount of pretreatment liquid reached 100% by mass

<Preparation of White Ink W1>

The following components were mixed to prepare a white ink W1.

-Composition of White Ink W1-

· White pigment dispersion liquid shown below
... 12% by mass in terms of content of the white pigment
· Propylene glycol (PG) [water-soluble organic solvent]
... 28% by mass
· Propylene glycol monomethyl ether (PGmME) [water-soluble organic solvent]
... 2% by mass
· OLFINE E1010 (manufactured by Nissin Chemical Co., Ltd.) [acetylene glycol-based surfactant]
... 0.60% by mass
· SOLSPERSE 43000 (manufactured by Lubrizol Japan Ltd.) [water-soluble polymer]
... 1% by mass

· PVP-K15 (polyvinylpyrrolidone K15)

... 0.12% by mass

· Urea

... 0.50% by mass

· SNOWTEX XS (manufactured by Nissan Chemical Corporation) [colloidal silica dispersion liquid]

... 0.1% by mass in terms of content of colloidal silica particles

· NeoCryl A-1091 (manufactured by Covestro AG) [aqueous dispersion liquid of styrene-acrylic resin particles]

... 5.0% by mass in terms of content of the styrene-acrylic resin particles

· Water

... residual amount of white ink such that total amount of white ink is 100% by mass

(Preparation of White Pigment Dispersion Liquid)

-Synthesis of Pigment Dispersing Agent P1-

965 g of dipropylene glycol was added to a 5000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol, and

a solution II obtained by dissolving 17.69 g of t-butyl peroxy-2-ethylhexanoate (product name, "PERBUTYL O", manufactured by NOF Corporation) in 221.17 g of dipropylene glycol

were respectively prepared.

The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by $^1$H-NMR.

The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as a pigment dispersing agent P1.

The structural units constituting the obtained random polymer were confirmed by $^1$H-NMR. In addition, the weight-average molecular weight (Mw) was acquired by GPC. The weight-average molecular weight (Mw) of the obtained pigment dispersing agent P1 was 8400, and the acid value thereof was 221.7 mgKOH/g.

-Preparation of White Pigment Dispersion Liquid-

The pigment dispersing agent P1 (150 parts by mass) was dissolved in water to prepare a polymer solution in which the concentration of the pigment dispersing agent P1 was 25% by mass.

96 parts by mass of the polymer solution, 300 parts by mass of C.I. Pigment White 6 (trade name, "JR-405", manufactured by Tayca Co., Ltd., titanium dioxide particles) as a white pigment, and 270 parts by mass of water were mixed to obtain a mixed solution. A potassium hydroxide aqueous solution was added to the obtained mixed solution, and the pH after neutralization was adjusted to 8.7.

Next, the mixed solution after neutralization was subjected to a dispersion treatment for 3 hours using a beads mill (bead diameter: 0.1 mmφ, zirconia beads). In this manner, a white pigment dispersion liquid (uncrosslinked dispersion liquid) PD1 in which the white pigment was dispersed by the pigment dispersing agent P1 was obtained.

Next, ultrafiltration was performed by allowing ion exchange water to flow through the obtained white pigment dispersion liquid (uncrosslinked dispersion liquid) PD1 at a flow rate of 600 mL per minute using an ultrafiltration device (cross-flow type ultrafilter (UF), manufactured by Sartorius AG). The liquid temperature was maintained at 25°C, and the ultrafiltration was performed three times by setting one time the volume of the charged liquid to once. Ion exchange water was added to the liquid after the ultrafiltration, thereby obtaining a dispersion liquid after ultrafiltration in which the concentration of the white pigment was 45% by mass and the concentration of the pigment dispersing agent P1 was 3.6% by mass.

1.35 parts by mass of trimethylolpropane polyglycidyl ether (product name, "Denacol EX-321", manufactured by Nagase ChemteX Corporation) as a crosslinking agent and 14.5 parts by mass of a boric acid aqueous solution (concentration of boric acid: 4% by mass) were added to 136 parts by mass of the dispersion liquid after ultrafiltration, and the mixture was allowed to react at 70°C for 6 hours and cooled to 25°C. In this manner, the pigment dispersing agent P1 in the dispersion liquid was crosslinked to form a pigment dispersing agent P1a which is a crosslinked polymer dispersing agent, and a white pigment dispersion liquid (crosslinked dispersion liquid) in which the white pigment was dispersed by the pigment dispersing agent P1a was obtained.

Ion exchange water was added to the obtained crosslinked dispersion liquid such that the concentration of the pigment was set to 15% by mass. Ultrafiltration was performed by allowing the crosslinked dispersion liquid to which ion exchange water had been added to flow into an ultrafiltration device (cross-flow type ultrafilter (UF), manufactured by Sartorius AG) provided with a polyether sulfone (PESU) film (size of micropores: $0.1 \mu m$) at a flow rate of 600 mL per minute. At this time, the liquid temperature was adjusted to 25°C, and the ultrafiltration was performed three times by setting 1 time the volume magnification of the charged liquid as once. Next, ion exchange water was added such that the concentration of the white pigment was set to 45% by mass. In this manner, a white pigment dispersion liquid was obtained.

The acid value of the pigment dispersing agent P1a contained in the white pigment dispersion liquid was 144 mgKOH/g. Further, the concentration of the pigment dispersing agent P1a was 3.6% by mass.

<White Inks W2 to W7>

White inks W2 to W7 were prepared in the same manner as in the preparation of the white ink W1, except that the composition of the ink was changed as shown in Table 1 below.

In the preparation of the white inks W2 to W7, the same white pigment dispersion liquid as the white pigment dispersion liquid used in the preparation of the white ink W1 was used as the white pigment dispersion liquid.

It is noted that the blank in Table 1 means that the corresponding component is not contained.

<Preparation of Cyan Ink C1>

A cyan ink C1 was prepared in the same manner as in the preparation of the white ink W1, except that the composition of the ink was changed as shown in Table 1 below.

In the preparation of the cyan ink C1, APD4000 Cyan (manufactured by Fujifilm Imaging Colorants Ltd.) was used as a cyan pigment dispersion liquid instead of the white pigment dispersion liquid.

[Table 1]

| Ink No. | | W1 | W2 | W3 | W4 | W5 | W6 | W7 | C1 |
|---|---|---|---|---|---|---|---|---|---|
| Component (% by mass) | White pigment | 12% | 12% | 12% | 12% | 12% | 12% | 12% | |
| | Cyan pigment | | | | | | | | 4% |
| | PG | 28% | 25% | 28% | 27% | 25% | 23% | 23% | 26% |
| | PGmME | 2% | 1% | 2% | 2% | 2% | 1% | 1% | 1% |
| | DEGmBE | | | | 1% | | | | |
| | OLFINE E1010 | 0.60% | 0.30% | 0.20% | 0.10% | 0.10% | 0.60% | 0.60% | 1.00% |
| | SURFYNOL 104P | | | | 0.50% | | | | |
| | Si-based surfactant (BYK-347) | | 0.20% | 0.30% | | 0.50% | | | |
| | Water-soluble polymer (Solsperse 43000) | 1% | 1% | 1% | 3% | 3% | 1% | 1% | |
| | PVP-K15 | 0.12% | 0.12% | 0.12% | 0.12% | 0.12% | 0.12% | 0.12% | 0.12% |
| | Urea | 0.50% | 0.50% | | | 0.50% | | 0.50% | |
| | SNOWTEX XS | 0.1% | 0.1% | 0.1% | 0.1% | 0.1% | 0.1% | 0.1% | 0.1% |
| | Superflex | | | 5% | | | | | |
| | NeoCryl A-1091 | 5% | 4% | | 1% | 1% | 6% | 6% | 5% |
| | Water | Residual amount | Residual amount | Residual amount | Residual amount | Residual amount | Residual amount | Residual amount | Residual amount |

-Details of Components in Table 1-

· White pigment ... white pigment in the above-described white pigment dispersion liquid

· Cyan pigment ... cyan pigment in APD4000 Cyan manufactured by Fujifilm Imaging Colorants Ltd., which is a cyan pigment dispersion liquid

· PG ... propylene glycol [water-soluble organic solvent]

· PGmME ... propylene glycol monomethyl ether [water-soluble organic solvent]

· DEGmBE ... diethylene glycol monobutyl ether [water-soluble organic solvent]

· OLFINE E1010 ... acetylene glycol-based surfactant manufactured by Nissin Chemical Co., Ltd. · SURFYNOL 104P ... acetylene glycol-based surfactant manufactured by Nissin Chemical Co., Ltd.

· BYK-347 ... silicone-based surfactant manufactured by BYK-Chemie GmbH

· SOLSPERSE 43000 ... water-soluble polymer manufactured by Lubrizol Japan Ltd.

· PVP-K15 ... polyvinylpyrrolidone K15

· SNOWTEX XS ... colloidal silica dispersion liquid manufactured by Nissan Chemical Corporation The content in Table 1 is the content as a solid content (colloidal silica particles).

· Superflex ... Superflex 460 Aqueous dispersion liquid of urethane resin particles manufactured by DKS Co., Ltd. The content in Table 1 is the content as a solid content (resin particles).

· NeoCryl A-1091 ... aqueous dispersion liquid of styrene-acrylic resin particles manufactured by Covestro AG The content in Table 1 is the content as a solid content (resin particles).

<Preparation of Image Recording Apparatus>

As an image recording apparatus used for evaluation, the image recording apparatus shown in Fig. 1 according to the above-described example was prepared.

A gravure coater was used as the pretreatment liquid applying device P1.

The drying method in the pretreatment liquid drying zone DP1 was hot air drying.

An ink jet head for cyan was disposed as the first ink jet head IJ1.

An ink jet head for white was disposed as the second ink jet head IJ2.

Any of the ink jet heads and the conditions for jetting the ink were as follows.

· Ink jet head: 1200 dpi (dot per inch, 1 inch is 2.54 cm)/20-inch width piezo full line head (total number of nozzles: 2048) was used.

· Ink droplet amount: set to 2.0 pL

· Driving frequency: set to 30 kHz

The drying method in both of the first drying zone D1 and the second drying zone D2 was hot air drying.

An air cooling zone (not shown) was provided between the second drying zone D2 and the winding device R2.

A tension controller ("LE-40MTA" manufactured by Mitsubishi Electric Corporation) was incorporated in the ink jet recording device, and thereby, in the ink jet recording described later, the tension (particularly, the tension P in the winding unit described later) applied to the non-permeable substrate was controlled.

<Preparation of Non-Permeable Substrate>

The following non-permeable substrates were prepared as non-permeable substrates used for evaluation.

In each of Examples and Comparative Examples described later, any one of the following non-permeable substrates was used (specifically, refer to Table 2).

· P2161 ... OPP film "PYLEN Film OT" manufactured by Toyobo Co., Ltd., having a thickness of 25 $\mu$m or 40 $\mu$m

· PET ... PET film "Taiko Polyester Film FE2001" manufactured by Futamura Chemical Co., Ltd., having a thickness of 12 $\mu$m, 25 $\mu$m, or 50 $\mu$m

· Back surface-treated PET ... a PET film "Taiko Polyester Film FE2001" (thickness: 12 $\mu$m) manufactured by Futamura Chemical Co., Ltd., of which the back surface was subjected to a corona treatment. The corona treatment was performed using a corona treatment device "Corona Master PS-10S" manufactured by Shinko Electric & Instrumentation Co., Ltd., under the conditions of a treatment voltage of 15 kV and a treatment speed of 100 mm/s.

· FOR-AQ ... OPP film "TAIKO Polypropylene Film" manufactured by Futamura Chemical Co., Ltd., having a thickness of 25 $\mu$m

· Nylon ... Nylon film "ON-25" manufactured by Unitika Ltd., having a thickness of 25 $\mu$m

[Example 1]

<Image Recording>

The following ink jet recording was performed using the image recording apparatus, the non-permeable substrate (P2161, thickness: 25 $\mu$m), the above-described pretreatment liquid, and the above-described white ink W1, thereby obtaining a substrate with an image. In Example 1, the cyan ink was not used, and the treatment was not performed by the first ink jet head IJ1 and the first drying zone D1.
First, the non-permeable substrate was unwound by the unwinding device R1,

the unwound non-permeable substrate was transported in a state where a tension was applied,
the pretreatment liquid was applied to the transported non-permeable substrate by a gravure coater as the pretreatment liquid applying device P1,
next, the pretreatment liquid was dried in the pretreatment liquid drying zone DP1,
next, the first ink jet head IJ1 and the first drying zone D1 were allowed to pass through without stopping,
next, the white ink W1 was applied in a form of solid image by the second ink jet head IJ2 on a region of the non-permeable substrate to which the pretreatment liquid had been applied, and
next, the white ink W1 was dried in the second drying zone D2.

By the above operation, a white image (solid image) derived from the white ink W1 was recorded on the non-permeable substrate being transported, and a substrate with an image was obtained.
Next, the obtained substrate with an image was air-cooled and then wound by a winding device R2 including a winding core to obtain a roll of the substrate with an image.
In the image recording described above, the transportation speed of the non-permeable substrate was adjusted to 70 m/min, and the tension P of the non-permeable substrate at a distance of 1 m or less from the winding device R2 (hereinafter, also referred to as "tension P at the winding unit") was adjusted to the value shown in Table 2. The tension P (N/m) of the winding unit was measured with a tension meter.
The amount of the pretreatment liquid to be applied was set to 1.7 g/m$^2$.
The application amount of the white ink was set to 3.8 g/m$^2$.
The pretreatment liquid was dried under the conditions of 40°C and 3 seconds.
The drying condition of the white ink was 70°C and 20 seconds (hereinafter, this drying condition is referred to as "control").

<Measurement of Surface Energy and Calculation of Surface Energy Difference $\Delta$E>

The surface energy (that is, the dispersion component $\gamma_S{}^d$, the hydrogen bonding component $\gamma_S{}^h$, and the surface energy $\gamma_S$) of the back surface of the non-permeable substrate was measured in advance by the above-described method immediately in front of the start of the image recording (specifically, before 1 hour or less after the start point of the image recording).
After winding in the image recording (specifically, within 1 hour after winding), the roll of the substrate with an image was unwound, and the surface energy of the white image in the substrate with an image (that is, the dispersion component $\gamma_S{}^d$, the hydrogen bonding component $\gamma_S{}^h$, and the surface energy $\gamma_S$) was measured by the above-described method.
Based on the above measurement results, the surface energy difference $\Delta$E (mJ/m$^2$) was calculated by the above-described method.
The results of the above are shown in Table 2.

<Calculation of $\Delta$E/P Ratio>

A $\Delta$E/P ratio was calculated based on the surface energy difference $\Delta$E and the tension P at the winding unit.
The results are shown in Table 2.

<Evaluation>

By the image recording, image recording for a length of 1000 m of the non-permeable substrate was performed, and a roll of the substrate with an image of a length of 1000 m of the non-permeable substrate was obtained.

The following evaluations were performed using the roll of the obtained substrate with an image.

The results are shown in Table 2.

(Blocking of White Image)

The roll of the substrate with an image was unwound, and blocking of the white image was evaluated at a position near 100 m from a position at the end of the winding according to the following evaluation standard.

In the following evaluation standard, the rank in which the blocking of the white image is most suppressed is AA.

-Evaluation Standard for Blocking of White Image-

AA: At a position near 100 m from the position at the end of winding, no peeling sound caused by unwinding was heard, and no transfer material was confirmed on the back surface of the non-permeable substrate.

A: At a position near 100 m from the position at the end of winding, a peeling sound caused by unwinding was heard, but the transfer material was not confirmed on the back surface of the non-permeable substrate.

B: At a position near 100 m from the position at the end of winding, peeling sound caused by unwinding was continuously heard, but the transfer material was not confirmed on the back surface of the non-permeable substrate.

C: At a position near 100 m from the position at the end of winding, a colorless and transparent transfer material was confirmed on the back surface of the non-permeable substrate.

D: At a position near 100 m from the position at the end of winding, a transfer material of the white image was confirmed on the back surface of the non-permeable substrate.

(Winding Deviation of Non-Permeable Substrate)

The roll of the substrate with an image used for the evaluation of blocking of the white image was observed, the maximum value of the distance (deviation amount) between the end part of the winding core in the axial direction and the end part of the non-permeable substrate in the width direction was measured, and the measurement result was defined as the winding deviation amount of the non-permeable substrate. Based on the winding deviation amount of the non-permeable substrate, the winding deviation of the non-permeable substrate was evaluated according to the following evaluation standards.

In the following evaluation standard, the rank AA is assigned to the case where the winding deviation of the non-permeable substrate is most suppressed.

-Evaluation Standard for Winding Deviation of Non-Permeable Substrate-

AA: The winding deviation amount of the non-permeable substrate was less than 0.5 mm.

A: The winding deviation amount of the non-permeable substrate was 0.5 mm or more and less than 1.0 mm.

B: The winding deviation amount of the non-permeable substrate was 1.0 mm or more and less than 2.0 mm.

C: The winding deviation amount of the non-permeable substrate was 2.0 mm or more and less than 3.0 mm.

D: The winding deviation amount of the non-permeable substrate was 3.0 mm or more.

[Examples 2 to 7 and 9 to 12]

The same operation as in Example 1 was performed except that at least one of the type of the white ink, the drying conditions of the white ink, the type of the non-permeable substrate, the thickness of the non-permeable substrate, or the tension P at the winding unit was changed as shown in Table 2.

The results are shown in Table 2.

Regarding the drying conditions of the white ink, "strong drying" means drying condition of 75°C and 20 seconds, and "weak drying" means drying condition of 65°C and 20 seconds.

[Example 8]

The same operation as in Example 2 was performed except that the application of the cyan ink C1 by the first ink jet head IJ1 and the drying of the cyan ink C1 in the first drying zone D1 were added between the drying of the pretreatment liquid and the application of the white ink.

The results are shown in Table 2.

In Example 8, the cyan ink C1 was applied in a form of solid image on the region to which the pretreatment liquid of the non-permeable substrate was applied, and the white ink W1 was applied in a form of solid image so as to overlap the cyan ink C1 applied on the region (that is, on the solid image of cyan).

The drying condition for the cyan ink C1 was 70°C and 20 seconds (that is, "control").

[Comparative Examples 1 to 5]

The same operation as in Example 1 was performed except that at least one of the type of the white ink, the drying conditions of the white ink, the type of the non-permeable substrate, the thickness of the non-permeable substrate, or the tension P at the winding unit was changed as shown in Table 2.

The results are shown in Table 2.

[Table 2]

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Pretreatment liquid | Present | Present | Present | Present | Present | Present | Present | Present | Present | Present | Present | Present | Present | Present | Present | Present | Present |
| Cyan ink | Absent | Absent | Absent | Absent | Absent | Absent | Absent | C1 | Absent | Absent | Absent | Absent | Absent | Absent | Absent | Absent | Absent |
| White ink | W1 | W1 | W1 | W1 | W2 | W1 | W1 | W1 | W1 | W1 | W3 | W4 | W5 | W1 | W6 | W7 | W1 |
| Drying condition of white ink | control | control | Strong drying | Weak drying | control | Strong drying | Strong drying | control | control | control | control | control | control | control | control | control | control |
| Type and thickness of non-permeable substrate | P2161 25μm | PET 12μm | PET 12μm | PET 12μm | PET 50μm | PET 12μm | PET 12μm | PET 12μm | Back surface-treated PET 12μm | PET 12μm | PET 50μm | P2161 40μm | FOR-AQ | P2161 25μm | Nylon | PET 25μm | PET 12μm |
| Surface energy of white image (mJ/m²) $\gamma_S^d$ | 36.4 | 36.4 | 34.3 | 37.0 | 42.3 | 34.3 | 34.3 | 34.3 | 46.2 | 36.4 | 35.6 | 48.2 | 48.1 | 36.4 | 36.4 | 36.3 | 36.4 |
| Surface energy of white image (mJ/m²) $\gamma_S^h$ | 6.6 | 6.6 | 12.1 | 13.5 | 24.8 | 12.1 | 12.1 | 5.8 | 16.5 | 6.6 | 25.1 | 28.0 | 24.8 | 6.6 | 6.6 | 4.4 | 6.6 |
| Surface energy of white image (mJ/m²) $\gamma_S$ | 42.9 | 42.9 | 46.4 | 50.5 | 67.1 | 46.4 | 46.4 | 40.1 | 62.7 | 42.9 | 60.7 | 76.2 | 72.9 | 42.9 | 42.9 | 40.7 | 42.9 |
| Surface energy of back surface of non-permeable substrate (mJ/m²) $\gamma_S^d$ | 34.9 | 45.3 | 45.3 | 45.3 | 46.8 | 45.3 | 45.3 | 45.3 | 45.3 | 45.3 | 46.8 | 33.4 | 33.8 | 34.9 | 36.9 | 43.5 | 45.3 |
| Surface energy of back surface of non-permeable substrate (mJ/m²) $\gamma_S^h$ | 0.3 | 2.7 | 2.7 | 2.7 | 2.5 | 2.7 | 2.7 | 2.7 | 2.7 | 2.7 | 2.5 | 0.0 | 0.2 | 0.3 | 4.6 | 6.6 | 2.7 |
| Surface energy of back surface of non-permeable substrate (mJ/m²) $\gamma_S$ | 35.2 | 48.0 | 48.0 | 48.0 | 49.3 | 48.0 | 48.0 | 48.0 | 48.0 | 48.0 | 49.3 | 33.4 | 34.0 | 35.2 | 41.5 | 50.1 | 48.0 |
| Surface energy ΔE (mJ/m²) | 6.4 | 9.8 | 14.6 | 13.6 | 22.7 | 14.6 | 14.6 | 11.5 | 13.8 | 9.8 | 25.2 | 31.7 | 28.4 | 6.4 | 2.0 | 7.6 | 9.8 |
| Tension P at winding unit (N/m) | 70 | 70 | 70 | 70 | 70 | 30 | 25 | 70 | 70 | 150 | 50 | 60 | 30 | 150 | 70 | 150 | 10 |
| ΔE/P | 0.09 | 0.14 | 0.21 | 0.19 | 0.32 | 0.49 | 0.58 | 0.16 | 0.20 | 0.07 | 0.50 | 0.53 | 0.95 | 0.04 | 0.03 | 0.05 | 0.98 |

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Blocking of white image | B | A | AA | A | AA | AA | AA | A | A | C | AA | AA | AA | D | D | D | AA |
| Winding deviation of non-permeable substrate | AA | AA | AA | AA | AA | B | C | A | B | AA | B | C | D | AA | AA | A | D |

EP 4 563 365 A1

As listed in Table 2, in Examples 1 to 12 in which the ∆E/P ratio was 0.06 to 0.60, the blocking of the white image and the winding deviation of the non-permeable substrate were suppressed.

On the other hand, in Comparative Examples 2 to 4 in which the ∆E/P ratio was less than 0.06, the blocking of the white image could not be suppressed.

In addition, in Comparative Examples 1 and 5 in which the ∆E/P ratio was more than 0.60, the blocking of the white image could be suppressed, but the winding deviation of the non-permeable substrate could not be suppressed.

From the results of Examples 1, 5, 11, and 12, it was found that in a case where ∆E was 5.0 to 25.0 (Examples 1 and 5), the winding deviation of the non-permeable substrate was further suppressed.

From the results of Examples 1, 6, 7, and 10, it was found that in a case where P was 30 to 150 (Examples 1, 6, and 10), the winding deviation of the non-permeable substrate was further suppressed.

From the results of Examples 1 to 12, it was found that in a case where the ∆E/P ratio was 0.10 or more (Examples 2 to 9, 11, and 12), the blocking of the white image was further suppressed.

From the results of Examples 1 to 12, it was found that in a case where the ∆E/P ratio was 0.50 or less (Examples 1 to 6 and 8 to 11), the winding deviation of the non-permeable substrate was further suppressed.

[Modification Example of Example 8]

The same operation as in Example 8 was performed except that the cyan ink C1 in Example 8 was replaced with a magenta ink M1 prepared as follows (modification example of Example 8). As a result, even in this modification example, the same evaluation results as the evaluation results in Example 8 were obtained.

<Preparation of Magenta Ink M1>

A magenta ink M1 was prepared in the same manner as in the preparation of the cyan ink C1, except that the cyan pigment dispersion liquid (APD4000 Cyan; manufactured by Fujifilm Imaging Colorants Ltd.) in the preparation of the cyan ink C1 was changed to APD4000 Magenta (manufactured by Fujifilm Imaging Colorants Ltd.) and APD1000 Red (manufactured by Fujifilm Imaging Colorants Ltd.) as a magenta pigment dispersion liquid. In this case, the respective amounts of the APD4000 Magenta and the APD1000 Red used were adjusted such that the content of the pigment in the APD4000 Magenta was 4.9% by mass with respect to the total amount of the magenta ink M1, and the content of the pigment in the APD1000 Red was 1.6% by mass with respect to the total amount of the magenta ink M1.

The example groups in which the pretreatment liquid was applied before the application of the white ink have been described above, but the application of the pretreatment liquid may be omitted.

Even in a case where the application of the pretreatment liquid is omitted and the white image is recorded directly on the non-permeable substrate or through the colored image, the effects of suppressing blocking of the white image and suppressing the winding deviation of the non-permeable substrate can be obtained in the same manner as in the above-described example groups.

The disclosure of JP2022-122181 filed on July 29, 2022 is incorporated in the present specification by reference.

All documents, patent applications, and technical standards described in the present specification are herein incorporated by reference to the same extent that each individual document, patent application, or technical standard was specifically and individually indicated to be incorporated by reference.

**Claims**

1. An image recording method comprising:

   a recording step of recording a white image by applying a white ink comprising water and a white pigment onto one surface of a non-permeable substrate by an ink jet method; and
   a winding step of winding the non-permeable substrate on which the white image is recorded in a state where a tension is applied,
   wherein, with the proviso that a surface energy difference between the other surface of the non-permeable substrate and a surface of the white image is represented by ∆E in units of $mJ/m^2$ and the tension is represented by P in units of N/m, a ∆E/P ratio, which is a value obtained by dividing ∆E by P, is 0.06 to 0.60.

2. The image recording method according to claim 1,
   wherein the recording step further comprises recording a colored image by applying a colored ink comprising water and a coloring pigment onto the one surface of the non-permeable substrate by an ink jet method.

3. The image recording method according to claim 2,
   wherein the colored image is recorded before the white image so that the colored image is disposed between the one surface of the non-permeable substrate and the white image.

4. The image recording method according to any one of claims 1 to 3,
   wherein the $\Delta E$ is 5.0 to 25.0.

5. The image recording method according to any one of claims 1 to 3,
   wherein the P is 30 to 150.

6. The image recording method according to any one of claims 1 to 3,
   wherein the $\Delta E/P$ ratio is 0.10 to 0.50.

7. The image recording method according to any one of claims 1 to 3, further comprising:

   before the recording step, a step of applying a pretreatment liquid comprising water and an aggregating agent onto the one surface of the non-permeable substrate,
   wherein, in the recording step, the white ink is applied onto a region on the one surface onto which the pretreatment liquid has been applied, to record the white image.

8. An image recording apparatus for use in the image recording method according to any one of claims 1 to 7, the apparatus comprising:

   a recording unit that comprises an ink jet head for applying the white ink onto the one surface of the non-permeable substrate, and performs the recording step of recording the white image on the one surface of the non-permeable substrate; and
   a winding unit that comprises a winding device that winds the non-permeable substrate on which the white image has been recorded in a state where a tension is applied, and performs the winding step,
   wherein the $\Delta E/P$ ratio is 0.06 to 0.60.

FIG. 1

## INTERNATIONAL SEARCH REPORT

| International application No. |
|---|
| **PCT/JP2023/025911** |

| A. | CLASSIFICATION OF SUBJECT MATTER |
|---|---|

*B41M 5/00*(2006.01)i; *B41J 2/01*(2006.01)i; *B41J 2/21*(2006.01)i; *C09D 11/322*(2014.01)i
FI:  B41M5/00 100; B41J2/01 501; B41J2/21; B41M5/00 112; B41M5/00 120; B41M5/00 132; C09D11/322

According to International Patent Classification (IPC) or to both national classification and IPC

| B. | FIELDS SEARCHED |
|---|---|

Minimum documentation searched (classification system followed by classification symbols)

B41M5/00; B41J2/01; B41J2/21; C09D11/322

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/015047 A1 (FUJIFILM CORPORATION) 28 January 2021 (2021-01-28) claims, examples, paragraphs [0115]-[0116] | 1-8 |
| A | WO 2017/138436 A1 (KAO CORPORATION) 17 August 2017 (2017-08-17) claims, examples, paragraph [0041] | 1-8 |
| A | JP 2019-025651 A (RICOH CO LTD) 21 February 2019 (2019-02-21) claims, paragraphs [0015], [0022], examples | 1-8 |
| A | JP 2015-120289 A (CANON KK) 02 July 2015 (2015-07-02) claims, paragraph [0055] | 1-8 |
| A | JP 2013-193287 A (MITSUBISHI PAPER MILLS LTD) 30 September 2013 (2013-09-30) claims, paragraph [0015] | 1-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

31

**INTERNATIONAL SEARCH REPORT**
Information on patent family members

International application No.

**PCT/JP2023/025911**

| Patent document cited in search report | | | Publication date (day/month/year) | Patent family member(s) | | | Publication date (day/month/year) |
|---|---|---|---|---|---|---|---|
| WO | 2021/015047 | A1 | 28 January 2021 | US claims, examples, paragraphs [0293]-[0302] EP CN | 2022/0143999 4005799 114174070 | A1 A1 A | |
| WO | 2017/138436 | A1 | 17 August 2017 | US claims, examples, paragraphs [0139]-[0143] EP CN | 2019/0030918 3415320 108698402 | A1 A1 A | |
| JP | 2019-025651 | A | 21 February 2019 | (Family: none) | | | |
| JP | 2015-120289 | A | 02 July 2015 | US claims, paragraph [0086] EP CN | 2015/0174937 2889151 104723715 | A1 A1 A | |
| JP | 2013-193287 | A | 30 September 2013 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018165314 A
- WO 2021221069 A
- JP 2015025076 A
- WO 2021192720 A
- WO 2017149917 A
- JP 59157636 A
- JP S59157636 A
- JP 2003322926 A
- JP 2004325707 A
- JP 2004309806 A

- JP 5430316 B
- JP 54059936 A
- JP 2003306623 A
- JP 2002012607 A
- JP 2002188025 A
- JP 2003026978 A
- JP 2003342503 A
- WO 2020195360 A
- JP 2022122181 A

**Non-patent literature cited in the description**

- **D. K. OWENS** ; **R. C. WENDT**. *Journal of applied polymer science*, 1969, vol. 13, 1741-1747